# EUROPEAN PATENT SPECIFICATION

(11) **EP 3 412 474 B1**
(45) Date of publication and mention of the grant of the patent: **18.08.2021**
(21) Application number: 18176160.2
(22) Date of filing: 05.06.2018
(51) Int. Cl.: B42D 25/324, B42D 25/346, B42D 25/351, B42D 25/364, B42D 25/373, B42D 25/378, B42D 25/23, B42D 25/24, B42D 25/29, B42D 25/425, B42D 25/45, B42D 25/47, B42D 13/00, G09F 3/02

(54) **AUTHENTICATION AND LOGISTICS LABEL AND ASSOCIATED METHOD**
AUTHENTIFIZIERUNGS- UND LOGISTIKETIKETT UND ZUGEHÖRIGES VERFAHREN
ÉTIQUETTE LOGISTIQUE ET D'AUTHENTIFICATION ET PROCÉDÉ ASSOCIÉ

(30) Priority: 05.06.2017 US 201762515078 P
(43) Date of publication of application: 12.12.2018
(73) Proprietor: OpSec Security Group, Inc., Lakewood, CO 80235 (US)
(72) Inventor: HILL, Dean, New Freedom, PA 17349 (US); FILMORE, Rob, New Freedom, PA 17349 (US)
(74) Representative: Serjeants LLP

(56) References cited:
- WO-A1-2010/040972
- WO-A1-2011/100386
- US-A- 4 177 586
- US-A1- 2010 314 162

## Description

### BACKGROUND

### Field

The disclosed concept relates generally to anti-counterfeiting measures, and in particular, to a label construction and a method of making a label construction.

### Description of Related Art

Counterfeit garments, unauthorized overproduction, and diversion of branded products cost brand owners billions of dollars annually. To fight such counterfeiting, brand owners often affix security devices to their products. Such devices, typically individually numbered and/or bar-coded optically variable security devices (OVDs), are well known in the art.

An OVD is a visual device that creates a change or shift in appearance, such as a change in color or shape, when observed from different relative observation points. The evolution of the OVD as a security device stems largely from its ability to exhibit optical effects that cannot be reproduced using traditional printing and/or photocopying processes. OVDs can only be reproduced by sophisticated and expensive, often proprietary, processes and equipment that most counterfeiters lack. OVDs can be based on several technologies, such as without limitation, holographic effects, diffractive gratings, liquid crystal effects, color-shifting inks or pigments, and micro-lens integral and autostereoscopic imaging techniques. Most commercial OVDs, however, are made by casting microscopic diffractive gratings into a curable liquid casting resin, curing the resin into a solid layer, and coating with a continuous or non-continuous layer of reflective material.

Traditionally, garment tags are made from a generally soft fabric substrate that can be easily attached to a garment by sewing. Woven fabric tags are generally produced in the form of a continuous fabric strip or tape from which individual tags are cut. Unfortunately, cast features such as OVDs are difficult to apply to such fabric strips because casting resin does not properly adhere to fabric substrates.

Writing and logos are either woven into the fabric strip with yarn of a contrasting color or printed onto the fabric strip generally through a rudimentary printing process. High-quality and multi-color printing are not possible on such fabric strips generally due to the roughness of the fabric surface and the difficulty of proper register due to the instability of the fabric caused by machinery stresses and environmental changes.

The print quality of fabric tags can be improved by applying a coating to the surface of the fabric before printing. The coating imparts some directional stability and provides a smoother printing surface. Coated fabric garment label stock is available commercially in rolls from several manufacturers. However, none of the currently available coated woven or non-woven garment label stock is suitable for the application of casting resin.

OVDs are generally produced in plastic film substrates that are not suitable to be sewn into garments directly. Such films are generally comprised of solid layers that when perforated by a sewing needle tend to undesirably fracture and break away along the stitch line. In addition, such films are quite stiff. If a film is sewn into an inside seam of a garment, an attachment method brand owners prefer, the exposed corners and edges of the film tend to irritate the wearer by pricking and scratching the wearer's skin.

A composite film/woven label has generally been successful in solving many sewing and skin irritation issues. Here the security film is applied to a woven material, and the woven tag is then sewn into the garment. The woven material extends beyond the edges of the film on all sides. This tag provides a woven flange on one edge to facilitate sewing, and it provides soft exposed edges where the tag contacts the wearer's skin. Unfortunately, this solution is very time-consuming and costly and thus not desirable for use in typical high-volume applications. In order to achieve sufficient adhesion between the film and the woven material, it is necessary to use a relatively thick layer of heat-sensitive adhesive. A relatively long dwell time is needed to allow the adhesive to heat up so that it will flow between the fibers of the woven material.

As such, there remains an unfilled need for an inexpensive security device that includes both high-quality multi-color printing and cast OVD features, and that can be quickly, easily and cost-effectively sewn into garments.

There is also a need for a method and device to verify the authenticity of goods that is low in cost, secure against counterfeits made by perpetrators of all levels of skill and resources, easy to apply, and easy to authenticate.

Further, there is a need for such an authentication device that includes logistics and tracking features.

WO 2010/040972 discloses a security article comprising a substrate having first and second surfaces, a first adhesive layer is applied to a first surface and includes an additive which is responsive to at least a selected wavelength of laser radiation. A laminate comprising a second adhesive layer is bonded to the first adhesive layer. A print layer is incorporated between the first and second adhesive layers.

US 2010/314162 discloses microporous materials comprising a polymeric matrix with renewable polymer and an optional polyolefin. Finely divided, particulate filler is distributed throughout the matrix.

### SUMMARY OF THE INVENTION

These needs and others are met by the embodiments of the disclosed concept as defined in claims 1 and 13.

The invention provides a label construction according to claim 1.

The invention further provides a method of making a label construction according to claim 13.

### BRIEF DESCRIPTION OF THE DRAWINGS

FIG. 1A is a stylized illustration showing the layers of a label construction according to an example embodiment of the disclosed concept;
FIG. 1B is a stylized illustration showing the layers of a label construction according to another example embodiment of the disclosed concept;
FIG. 1C is a stylized illustration showing the layers of a label construction according to another example embodiment of the disclosed concept;
FIG. 2 is a stylized illustration showing the layers of a label construction according to another example embodiment of the disclosed concept;
FIG. 3 is a plan view of a label construction according to an example embodiment of the disclosed concept; and
FIG. 4 is flow diagram illustrating a method of making a label construction according to an example embodiment of the disclosed concept.

### DESCRIPTION OF THE PREFERRED EMBODIMENTS

Both main types of known and commercially available material substrates suitable for making labels to be permanently applied to apparel and footwear - woven fabrics and non-woven fabrics - have properties that meet the needs of printed labels for apparel and footwear, but neither has the additional properties needed to cast optical security images onto their surfaces for conversion to security labels.

Conversely, none of the known and commercially available films suitable for the casting of optical security images onto their surfaces meet the needs of material substrates suitable for making labels to be permanently applied to apparel and footwear.

In accordance with example embodiments of the disclosed concept, a label construction is provided which includes a combination of a microporous film layer and an elastomeric film layer. In accordance with example embodiments of the disclosed concept, label constructions provided with the combination of a microporous film layer and an elastomeric film layer are able to be permanently applied to apparel, footwear, or other materials, and are suitable for the casting of optical security images onto their surfaces.

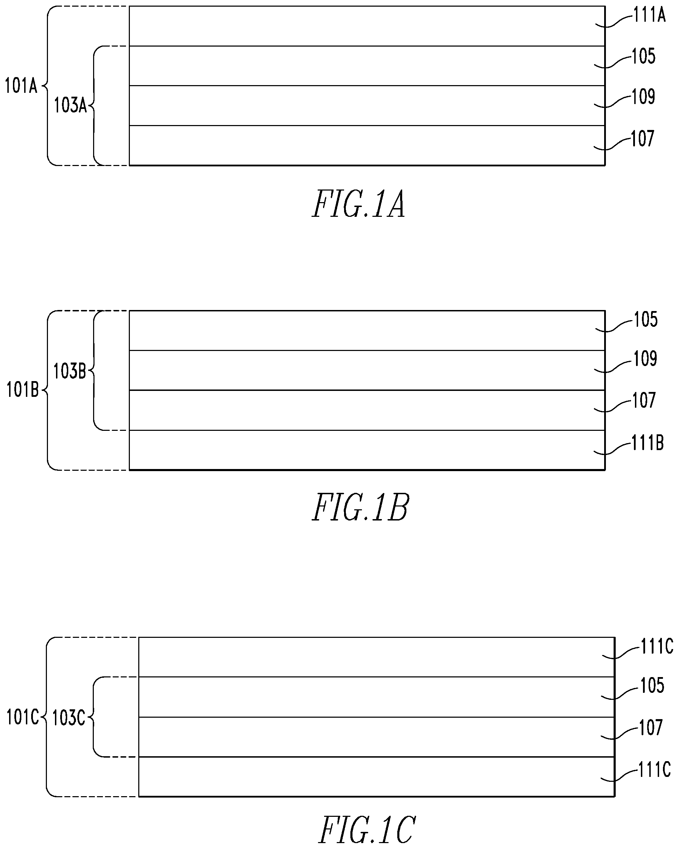

FIG. 1A illustrates a label construction 101A made in accordance with an example embodiment of the disclosed concept. The label construction 101A includes a label substrate 103A which includes a layer of microporous film 105 and a layer of elastomeric film 107. In some example embodiments, the substrate 103A may also include a layer of adhesive 109. The substrate 103A may be formed by laminating together the layers of microporous film 105 and elastomeric film 107 in some example embodiments, or by laminating together the layers of microporous film 105, elastomeric film 107, and adhesive 109 in some example embodiments. In some example embodiments including a layer of adhesive 109, there is more than one layer of adhesive 109. As shown in FIG. 1A, a layer of functional material 111A is disposed onto the microporous layer 105.

The functional material 111A imparts additional properties to the substrate 103A. For example, functional material 111A may include information or images printed on the substrate 103A. The layer of functional material 111A includes a layer of curable casting resin according to the invention and may also include, for example and without limitation, coatings and/or protective layers, additional ink or metallic layers, polymer coatings, pigments coatings or liquid crystal material disposed on the substrate 103A. The functional material 111A may be one or multiple layers 111A on the substrate 103A. The substrate 103A may be and a functional layer 111A disposed thereon is cast to create, for example, optically variable designs and imagery. The functional material 111A may be applied in continuous layers or in non-continuous layers. If formed in non-continuous layers, it may form patterns, images, characters or indicia. Non-continuous layers may be formed in register with other non-continuous layers, security features, or the edge of the label construction. According to the invention, the one or more functional materials include a layer of curable casting resin having an optical security image imprinted therein. Other security features may be any known or suitable device designed to verify the authenticity of the label construction 101A, and by extension the article on which the label construction 101A may be disposed, or to deter or resist the copying or alteration of the label construction 101A or tampering therewith, or for tracking the movement of articles through the supply chain. Such features may include, for example and without limitation, optically variable devices, patterned demetallization, microprint, color-shifting inks or pigments, liquid crystal constructs, holograms, diffractive gratings, micro-lens integral or autostereoscopic imaging devices, serial numbers, and/or bar codes.

The functional material 111A may be applied on either side of the substrate 103A; that is, the functional material 111A may be disposed on the side of the substrate 103A comprising the layer of microporous film 105 or on the side comprising the layer of elastomeric film 107. FIG. 1A illustrates a label construction 101A having a layer of functional material 111A disposed on the microporous layer 105 of the substrate 103A, while FIG. 1B illustrates a label construction 101B having a layer of functional material 111B disposed on the elastomeric layer 107 of a substrate 103B. Further, in some example embodiments, layers of functional material 111C may be disposed on both sides of a substrate 103C, as illustrated in FIG. 1C.

In some example embodiments of the disclosed concept, the layer of microporous film 105 is a film having a microporous internal structure containing 35-75% air by volume. The layer of microporous film 105 may provide a smooth surface on a macro scale for casting the micro structures of an optical security image while the microporous structure enables liquid casting compound to be absorbed and to penetrate the surface, anchoring the casting compound into the structure of the material when the compound is cured. The remaining unfilled microporous structure provides desirable flexibility over that of a more rigid solid film. In some example embodiments, the layer of microporous film 105 may be composed of polyolefin-based microporous films for synthetic paper applications, polypropylene-based microporous films for synthetic paper applications, or multilayered microporous films for synthetic paper applications.

However, the layer of microporous film 105 alone may not be suitable for permanent application to apparel and footwear. The layer of microporous film 105 alone may be prone to tearing too easily to be suitable for permanent application. This is especially true where the material is perforated along a stitch line when sewn in. Further, the material creases too easily and remains creased so that with handling, and especially in laundry cycles, the material can be permanently damaged with an accumulation of creases.

Laminating the layer of microporous film 105 to a layer of elastomeric film 107 solves these problems. The layer of elastomeric film 107 provides tear resistance to the substrate 103A, preventing the label construction 101A from tearing too easily along a stitch line. It also prevents the substrate 103A from creasing sharply and resists holding a crease. In some example embodiments, the layer of elastomeric film 107 may be composed of ethylene-vinyl acetate (EVA) with 9-28% by weight vinyl acetate and/or low density polyethylene (LDPE).

The combination of the layers of microporous film 105 and elastomeric film 107 gives the substrate 103A film-like properties needed for casting optical security images and the feel and flexibility of a fabric-like material with the chemical, wash, and heat-resistant properties that make the substrate 103A suitable for permanent application to apparel and footwear.

In some example embodiments, the layers of microporous film 105 and elastomeric film 107 may be laminated together to form the substrate 103A by using one or more of the following methods: heat, pressure and one or more adhesive layers 109 disposed between the layers of microporous film 105 and elastomeric film 107.

FIG. 1C illustrates a label construction 101C in accordance with an example embodiment of the disclosed concept. In this example embodiment, the substrate 103C is formed by laminating together the layers of microporous film 105 and elastomeric film 107 using heat and pressure, and without the use of an adhesive layer. It will be appreciated by those having ordinary skill in the art that the adhesive layer 109 may be included or omitted without departing from the scope of the disclosed concept. In the example embodiment shown in FIG. 1C, layers of functional material 111C are disposed onto both sides of the substrate 103C.

Referring back to FIG. 1A, one or more security features are formed on the substrate 103A. According to the invention, by coating one side of the substrate 103A with a layer of curable casting resin, applying an imprint of the image relief(s) to the liquid resin, and curing the resin to form a solid layer. The resin layer and optical security images are formed on either or both sides of the substrate 103A. According to the invention, the resin layer and optical security images are part of the layer of functional material 111A.

A reflective layer may also be applied over the resin layer containing the security image. For example, the security image may be vacuum coated with a layer of aluminum. The reflective layer may be continuous or non-continuous, and a non-continuous pattern may be in register with the security image. In some example embodiments, the reflective layer may also be part of the layer of functional material 111A.

A clear or translucent protective layer may be applied over the reflective layer. In some example embodiments, the protective layer may also be part of the layer of functional material 111A.

An ink or printed layer may be disposed on any of the layers. Print may be either fixed or variable or both. Print may be added in the label factory, or in the field - for example and without limitation, at the apparel factory. In some example embodiments, the print may also be part of the layer of functional material 111A.

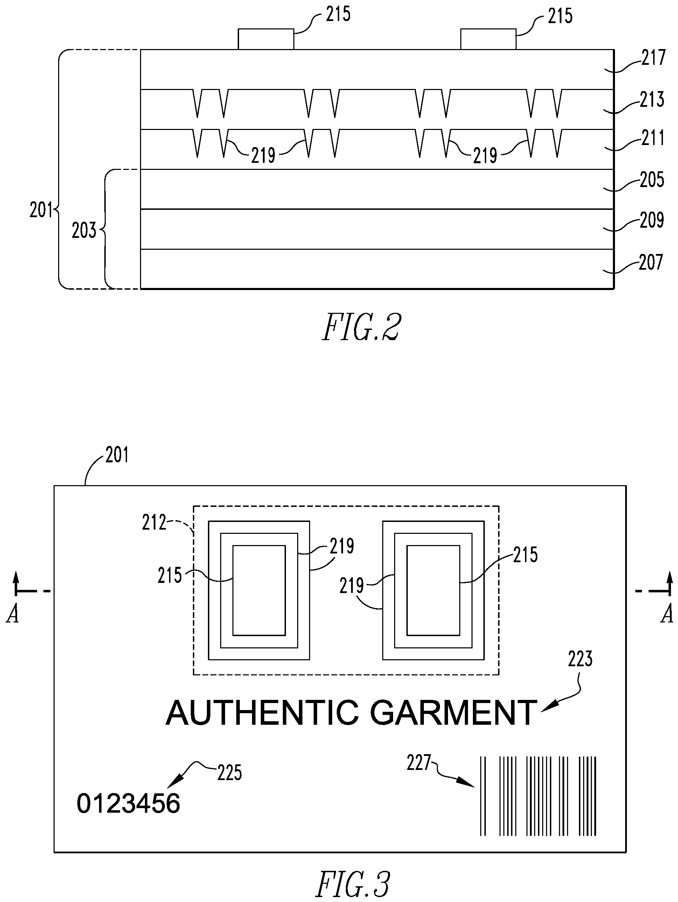

FIG. 2 illustrates a label construction 201 made in accordance with an example embodiment of the disclosed concept. The label construction 201 includes a label substrate 203 which includes a layer of microporous film 205 and a layer of elastomeric film 207. In some example embodiments, the substrate 203 may also include a layer of adhesive 209. The substrate 203 may be formed by laminating together the layers of microporous film 205 and elastomeric film 207 in some example embodiments, or by laminating together the layers of microporous film 205, elastomeric film 207, and adhesive 209 in some example embodiments.

The label construction 201 further includes a functional layer of curable casting resin 211 coated onto the microporous layer 205, and an optical security feature 219 cast into the surface of the layer of curable casting resin 211. A solid reflective layer 213 is formed on the casting resin layer 211. A clear protective layer 217 is disposed over the reflective layer 213. A non-continuous ink layer 215 is printed onto the protective layer 213 in register with the optical security image 219.

Although FIG. 2 illustrates one example arrangement of the label construction 201, it will be appreciated by those having ordinary skill in the art that any number and arrangement of layers and security features may be applied to the substrate 203 without departing from the scope of the disclosed concept.

FIG. 3 is a plan view of the label construction 201 shown in sectional view in FIG. 2, with the section of FIG. 2 having been taken along the line A-A shown in FIG. 3. Visible on the label construction 201 is a security and branding image 212 comprising the non-continuous ink layer 215 forming ink areas printed in register with the optical security image 219. In addition, informational text 223, a unique identifier 225, and a bar code 227 are shown.

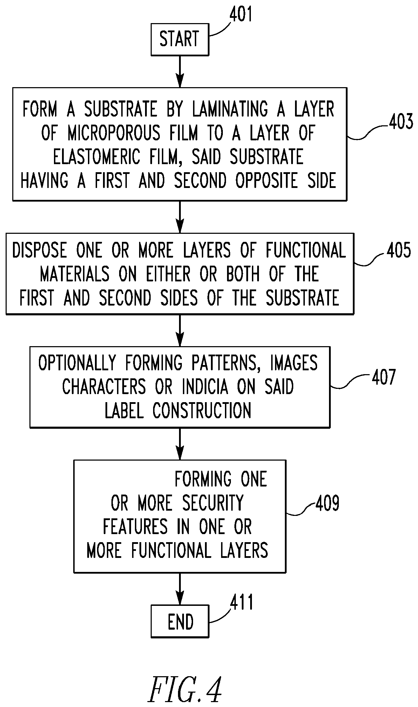

FIG. 4 is a flow chart illustrating a method of making a label construction. The method may be employed to make label constructions such as label constructions 101A, 101B, 101C, or 201 shown in FIGS. 1A, 1B, 1C, and 2. The method starts at 401.

At 403 a label substrate is formed by laminating together a layer of microporous film and a layer of elastomeric film, with said substrate having a first and a second opposite side. In some example embodiments, at least one layer of adhesive may be included between the layers of microporous film and elastomeric film.

In some example embodiments, the microporous film has an internal structure containing 35-75% air by volume. The layer of microporous film may provide a smooth surface on a macro scale for casting the micro structures of an optical security image while the microporous structure enables liquid casting compound to be absorbed and to penetrate the surface, anchoring the casting compound into the structure of the material when the compound is cured. The remaining unfilled microporous structure provides desirable flexibility over that of a more rigid solid film. In some example embodiments, the layer of microporous film may be composed of polyolefin-based microporous films for synthetic paper applications, polypropylene-based microporous films for synthetic paper applications, or multilayered microporous films for synthetic paper applications.

In some example embodiments, the layer of elastomeric film may be composed of ethylene-vinyl acetate (EVA) with 9-28% by weight vinyl acetate and/or low density polyethylene (LDPE).

In some example embodiments, the layers of microporous film and elastomeric film may be laminated together to form the substrate by using one or more of the following methods: heat, pressure and/or one or more adhesive layers disposed between the layers of microporous film and elastomeric film.

At 405 one or more layers of functional materials are disposed on either or both of the first and second sides of the substrate. The one ore more layers of functional materials include a layer of curable casting resin according to the invention and may further include a functional material such as, without limitation, ink, polymer coatings, pigment coatings, metal or liquid crystal material.

At 407, patterns, images, characters or indicia are optionally formed on the label construction. The functional layers may be disposed in a solid continuous coating, or in a non-continuous design. If non-continuous, a functional layer may be used to form, without limitation, patterns, images, characters, or indicia. Multiple continuous and non-continuous layers of similar or different functional materials may be disposed upon each other forming a multi-layer functional system to impart desired properties and effects to the label construction.

At 409, one or more security features are formed in one or more of the functional layers. Security features may be formed using continuous layers, non-continuous layers, or multi-layer combinations of functional materials, or are formed according to the invention in one or more layers of functional materials by casting. Further security features may be any known or suitable device designed to verify the authenticity of the label, and by extension the article on which the label may be disposed, or to deter or resist the copying or alteration of the label or tampering therewith, or for tracking the movement of articles through the supply chain. Such features may include, for example and without limitation, optically variable devices, patterned demetallization, microprint, color-shifting inks or pigments, liquid crystal constructs, holograms, diffractive gratings, micro-lens integral or autostereoscopic imaging devices, serial numbers, and/or bar codes.

It will be appreciated by those having ordinary skill in the art that step 407 may be omitted without departing from the scope of the disclosed concept.

The method ends at 411.

In an example embodiment, the label substrate is formed by laminating a layer of microporous film comprising a polyolefin-based film having a thickness of 80 µm (for example, POLYLITH material available from Granwell Products, Inc. of West Caldwell, New Jersey) with a layer of elastomeric film composed of an ethylene-vinyl acetate copolymer having 18% vinyl acetate extrusion coating by weight and a thickness of 75 µm (available, for example, from Transcendia of Franklin Park, Illinois) together by hot melt slot die extrusion.

A liquid layer of UV-curable casting resin is disposed on the microporous film layer side of the substrate, a security image relief comprising a diffractive pattern is impressed into the resin layer, and the resin layer is then hardened with exposure to ultraviolet light. A thin layer of reflective aluminum is disposed on the hardened resin layer by vacuum metallization, and a clear protective layer is then disposed on the aluminum reflective layer. Finally, printed information is disposed on the protective layer. Optionally, printed information may also be disposed on the elastomeric film layer side of the composite substrate.

Any overt or covert security, authentication, or logistics feature may be incorporated into the label construction such as, for example and without limitation, barcodes, serial numbers, unique validation codes, RFID inlays, NFC inlays, metric authentication features, demetallization in register with the optical security image, and secret codes hidden from the end-user by locating them in areas of the label that are not visible once the label has been affixed to the garment. Information and indicia may be printed in register with the optical security image.

Finished labels bearing security images may be affixed to garments, for example and without limitation, by sewing into apparel with thread, or by heat, pressure, or an adhesive layer, as in footwear.

Finished labels may be furnished to the apparel manufacturer in stacks of single labels, or in rolls from which each individual label is cut or torn off.

By assigning each label a unique identifier, systems may be developed to track the movement of labels and the goods to which they are affixed throughout the supply chain. By making each identifier random and by recording each identifier in a centralized database of authentic identifiers, authentication systems may be developed to allow remote authentication of label identifiers and therefore labels and goods.

In one example embodiment, labels are created with optical security images, brand graphics, and multiple overt, covert, digital, and forensic authentication features. In addition, each label may include size information, country of origin, care information, product data, and a unique ID code. The labels are manufactured in rolls, which are then cut into individual labels, stacked, and packaged. To facilitate tracking the packages, each package may have affixed an identification and tracking label affixed bearing a unique package ID that is stored in a centralized database and related to the destination factory and associated range of label ID codes. The finished labels are delivered to a footwear factory where one label is heat applied to each authorized shoe.

In another example embodiment, labels are created with optical security images, brand graphics, and multiple overt, covert, digital, and forensic authentication features. Each roll may have affixed an identification and tracking label affixed bearing a unique roll ID that is stored in a centralized database and related to the destination factory. The rolls are shipped to the footwear factory optionally in conjunction with a printer ribbon of verifiable ink. At the footwear factory, the ribbon is used to print further information on each label, for example and without limitation, size information, country of origin, care information, product data, and a unique ID code. The unique ID codes are also stored in the centralized database and associated with their respective unique roll ID codes. The labels are cut and stacked, and one label is heat applied to each authorized shoe.

In another example embodiment, labels are created with optical security images, brand graphics, and multiple overt, covert, digital, and forensic authentication features. In addition, each label may include size information, country of origin, care information, product data, and a unique ID code. The labels are manufactured as pressure sensitive labels on rolls of release liner. To facilitate tracking the rolls, each roll may have affixed an identification and tracking label affixed bearing a unique roll ID that is stored in a centralized database and related to the destination factory and associated range of label ID codes. The finished labels are delivered to a footwear factory where one label is applied to each authorized shoe box.

In another example embodiment, labels are created with optical security images, brand graphics, and multiple overt, covert, digital, and forensic authentication features. The labels are manufactured as pressure sensitive labels on rolls of release liner. Each roll may have affixed an identification and tracking label affixed bearing a unique roll ID that is stored in a centralized database and related to the destination factory. The rolls are shipped to the footwear factory optionally in conjunction with a printer ribbon of verifiable ink. At the footwear factory, the ribbon is used to print further information on each label, for example and without limitation, size information, country of origin, care information, product data, and a unique ID code. The unique ID codes are also stored in the centralized database and associated with their respective unique roll ID codes. One label is applied to each authorized shoe box.

Without loss of generality, labels can be created and affixed to items such as individual units of apparel, packages, cases or boxes of multiple labeled or unlabeled individual units, pallets of cases, or truckloads or shipping containers of pallets, each label associated in the centralized database with its parent and/or children, forming a complete product tracking system. The reading of a single container label in a remote field location, for example, may inform the local user of the complete contents of the container, while also informing the brand or goods owner of the location of the container and its related contents at a given point in time.

The tracking system may be configured to allow remote digital authentication of individual labels and the goods affixed thereto. The use of unique serial numbers or codes for authentication purposes is well-known in the art. Such methods may be usefully employed by inclusion of such unique serial numbers on the instant security label. Such a method for verifying the authenticity of an article comprises the steps of: (a) producing said security device; (b) marking the device with a unique serial number; (c) recording the serial number in a database; and (d) providing the security device for affixing to an article, wherein authentication is confirmed if the serial number on the device-affixed article is the same as a serial number recorded in the database.

In practice, a user may verify the authenticity of an article to which a security label is affixed by reading the unique security code, either manually or with a device configured for machine-reading, transmitting the code to the central database, and receiving an appropriate message from the database indicating whether the security code is valid. Recording and transmission of additional product-specific information, such as the product type, description, location, or additional codes or numbers, can result in a more secure validation by reducing the possibility that a random security code affixed to a counterfeit product may be incorrectly validated by chance.

The security label may include information and features useful for consumers, law enforcement personnel, and/or brand owners. In a preferred embodiment, the label includes information and features for use by all three audiences.

A security label may include features designed for use by consumers. For example, a security image comprising an overt security feature such as a positional switch or animation may alert consumers that the label, and hence the product, is authentic. Additional features may be added for consumers using devices configured for machine-reading and connected to an information database such as the Internet, such as computers and smart phones. Machine-readable codes (such as bar codes) may encode links to information about the brand or the product. Such information may be useful for consumers seeking more information.

A security label may include features useful for law enforcement personnel. For example, a security image comprising an overt security feature such as a positional switch or animation may alert law enforcement personnel that the label, and hence the product, is authentic. The security image may also comprise one or more covert security features, for example patterns or codes visible only with specialized equipment or lighting. Additional features may be included for use with devices configured for machine reading, such as computers and smart phones having bar code readers, and appropriate software for interpreting machine-readable security codes. Devices connected to an authentication database, such as via the Internet, may give law enforcement personnel full access to the digital authentication features, allowing verification of complete product information, including for example, the factory of origin.

A security label may likewise include features useful for brand owners. In addition to the overt, covert and digital authentication features useful for law enforcement personnel, a security label may comprise machine-readable codes that encode links to information relating to, for example, the tracking of goods through the supply chain and statistical information relating to such shipments, allowing the brand owner to monitor and manage the production and shipment of authorized products globally.

While the label construction in accordance with example embodiments of the disclosed concept has been described in relation to security applications in the garment industry, the disclosed concept provides a quality and cost-saving improvement for non-security applications as well. For example, decorative diffractive or holographic designs or patterns, with or without demetallization in register, can be easily added to sew-in tags. The disclosed concept can also be applied to non-garment products, as well as high-value documents, for example and without limitation, ID's, transaction cards, tickets, and banknotes.

While embodiments of the disclosed concept have been described in varying detail, it will be appreciated by those skilled in the art that various modifications and alternatives to those details could be developed in light of the overall teachings of the disclosure. Accordingly, the particular arrangements disclosed are meant to be illustrative only and not limiting as to the scope of invention which is to be given the full breadth of the claims appended.

## Claims

1. A label construction (101A; 101B; 101C; 201) comprising:
a substrate (103A; 103B; 103C; 203) having a first and second opposite side, said substrate comprising:
a layer of microporous film (105; 205), and
a layer of elastomeric film (107; 207), wherein the layer of microporous film and the layer of elastomeric film are laminated together; and
one or more layers of functional materials (111A; 111B; 111C; 211) disposed on at least one of the first and second sides of the substrate;
wherein the one or more layers of functional materials (111A; 111B; 111C; 211) include a layer of curable casting resin having an optical security image imprinted therein.

2. A label construction (101A) according to claim 1, wherein the layer of microporous film forms the first side of the substrate, and wherein the one or more layers of functional materials (111A) are disposed on the first side of the substrate and not on the second side of the substrate.

3. A label construction (101B) according to claim 1, wherein the layer of elastomeric film forms the second side of the substrate, and wherein the one or more layers of functional materials (111B) are disposed on the second side of the substrate and not on the first side of the substrate.

4. A label construction (101C) according to claim 1, wherein the layer of microporous film forms the first side of the substrate, wherein the layer of elastomeric film forms the second side of the substrate, and wherein the one or more layers of functional materials (111C) are disposed on both the first and second sides of the substrate.

5. A label construction according to any preceding claim, wherein the layer of microporous film is composed of at least one of polyolefin-based microporous films, polypropylene-based microporous films for synthetic paper applications, or multilayered microporous films.

6. A label construction according to any of claims 1 to 4, wherein the layer of microporous film is composed of a polyolefin-based film having a thickness of about 80 µm.

7. A label construction according to any preceding claim, wherein the elastomeric film is composed of at least one of ethylene-vinyl acetate EVA with 9-28% by weight vinyl acetate and low density polyethylene LDPE.

8. A label construction according to any of claims 1 to 6, wherein the elastomeric film is composed of ethylene-vinyl acetate copolymer having about 18% vinyl acetate extrusion coating by weight and a thickness of about 75 µm.

9. A label construction (101A; 101B) according to any preceding claim, wherein the substrate further includes a layer of adhesive (109) disposed between the layers of microporous film and elastomeric film.

10. A label construction according to any preceding claim, wherein said one or more layers of functional materials include an additional layer selected from one or more of ink, polymer coatings, pigment coatings, reflective materials, and liquid crystal material.

11. A label construction according to claim 10, wherein at least one said layer of functional material forms patterns, images, characters or indicia.

12. A label construction according to claim 11, wherein said substrate has one or more edges, and further wherein said patterns, images, characters or indicia are in register with at least one said edge.

13. A method of making a label construction (101A; 101B; 101C; 201), the method comprising:
forming a substrate (103A; 103B; 103C; 203) by laminating a layer of microporous film (105; 205) to a layer of elastomeric film (107; 207), said substrate having a first and second opposite side; and
disposing one or more layers of functional materials (111A; 111B; 111C; 211) on at least one of the first and second sides of the substrate;
wherein the step of disposing one or more layers of functional materials (111A; 111B; 111C; 211) includes coating at least one of the first and second sides of the substrate with a layer of curable casting resin, applying an imprint of an optical security image to the liquid resin, and curing the resin to form a solid layer.

14. The method of claim 13 further comprising:
forming one or more patterns, images, characters or indicia on said label construction.

## Patentansprüche

1. Etikettaufbau (101A; 101B; 101C; 201), der umfasst:
ein Substrat (103A; 103B; 103C; 203), das eine erste und eine zweite entgegengesetzte Seite aufweist, wobei das Substrat umfasst:
eine Schicht aus mikroporöser Folie (105; 205), und
eine Schicht aus elastomerischer Folie (107; 207), wobei die Schicht aus mikroporöser Folie und die Schicht aus elastomerischer Folie aneinander laminiert sind; und
eine oder mehrere Schichten funktionaler Materialien (111A; 111B; 111C; 211), die auf mindestens einer der ersten und der zweiten Seite des Substrats angeordnet sind;
wobei die eine oder mehreren Schichten funktionaler Materialien (111A; 111B; 111C; 211) eine Schicht aus härtbarem Gießharz beinhalten, die ein optisches Sicherheitsbild darin gedruckt aufweist.

2. Etikettaufbau (101A) nach Anspruch 1, wobei die Schicht aus mikroporöser Folie die erste Seite des Substrats bildet, und wobei die eine oder mehreren Schichten funktionaler Materialien (111A) auf der ersten Seite des Substrats und nicht auf der zweiten Seite des Substrats angeordnet (sind.

3. Etikettaufbau (101B) nach Anspruch 1, wobei die Schicht aus elastomerischer Folie die zweite Seite des Substrats bildet, und wobei die eine oder die mehreren Schichten funktionaler Materialien (111B) auf der zweiten Seite des Substrats und nicht auf der ersten Seite des Substrats angeordnet sind.

4. Etikettaufbau (101C) nach Anspruch 1, wobei die Schicht aus mikroporöser Folie die erste Seite des Substrats bildet, wobei die Schicht aus elastomerischer Folie die zweite Seite des Substrats bildet, und wobei die eine oder mehreren Schichten funktionaler Materialien (111C) sowohl auf der ersten als auch auf der zweiten Seite des Substrats angeordnet sind.

5. Etikettaufbau nach einem vorstehenden Anspruch, wobei die Schicht aus mikroporöser Folie aus mindestens einer von mikroporösen Folien auf Polyolefinbasis, mikroporösen Folien auf Polypropylenbasis für Anwendungen mit synthetischem Papier oder mehrschichtigen mikroporösen Folien besteht.

6. Etikettaufbau nach einem der Ansprüche 1 bis 4, wobei die Schicht mikroporöser Folie aus einer Folie auf Polyolefinbasis, die eine Dicke von etwa 80 µm aufweist, besteht.

7. Etikettaufbau nach einem vorstehenden Anspruch, wobei die elastomerische Folie aus mindestens einem von Ethylenvinylacetat EVA mit 9 bis 28 Gew.-% Vinylacetat und niedrigdichtem Polyethylen LDPE besteht.

8. Etikettaufbau nach einem der Ansprüche 1 bis 6, wobei die elastomerische Folie aus Ethylenvinylacetatcopolymer besteht, das etwa 18 Gew.-% Vinylacetatextrusionsbeschichtung und eine Dicke von etwa 75 µm aufweist.

9. Etikettaufbau (101A; 101B) nach einem vorstehenden Anspruch, wobei das Substrat weiter eine Kleberschicht (109) beinhaltet, die zwischen den Schichten aus mikroporöser Folie und elastomerischer Folie angeordnet ist.

10. Etikettaufbau nach einem vorstehenden Anspruch, wobei die eine oder mehreren Schichten funktionaler Materialien eine zusätzliche Schicht beinhalten, die aus einer oder mehreren von Tinte, Polymerbeschichtungen, Pigmentbeschichtungen, reflektierenden Materialien und Flüssigkristallmaterial ausgewählt ist.

11. Etikettaufbau nach Anspruch 10, wobei die mindestens eine Schicht funktionalen Materials Muster, Bilder, Zeichen oder Markierungen bildet.

12. Etikettaufbau nach Anspruch 11, wobei das Substrat eine oder mehrere Kanten aufweist, und wobei die Muster, Bilder, Zeichen oder Markierungen weiter mit mindestens einer Kante übereinstimmen.

13. Verfahren zum Herstellen eines Etikettaufbaus (101A; 101B; 101C; 201), wobei das Verfahren umfasst:
Bilden eines Substrats (103A; 103B; 103C; 203) durch Laminieren einer Schicht mikroporöser Folie (105; 205) an eine Schicht elastomerischer Folie (107; 207), wobei das Substrat eine erste und zweite entgegengesetzte Seite aufweist; und
Anordnen einer oder mehrerer Schichten funktionaler Materialien (111A; 111B; 111C; 211) auf mindestens einer der ersten und der zweiten Seite des Substrats;
wobei der Schritt des Anordnens einer oder mehrerer Schichten funktionaler Materialien (111A; 111B; 111C; 211) das Beschichten mindestens einer der ersten und der zweiten Seite des Substrats mit einer Schicht aus härtbarem Gießharz, das Aufbringen eines Abdrucks eines optischen Sicherheitsbildes auf dem flüssigen Harz und das Härten des Harzes, um eine feste Schicht zu bilden, beinhaltet.

14. Verfahren nach Anspruch 13, das weiter umfasst:
Bilden eines oder mehrerer Muster, Bilder, Zeichen oder Markierungen auf dem Etikettaufbau.

## Revendications

1. Construction d'étiquette (101A ; 101B ;101C ; 201) comprenant :
un substrat (103A ; 103B ; 103C ; 203) présentant un premier et un second côté opposé, ledit substrat comprenant :
une couche de film microporeux (105 ; 205), et
une couche de film élastomère (107 ; 207), dans laquelle la couche de film microporeux et la couche de film élastomère sont stratifiées ensemble ; et
une ou plusieurs couches de matériaux fonctionnels (111A ; 111B; 111C ; 211) disposées sur au moins l'un des premier et second côtés du substrat ;
dans laquelle les une ou plusieurs couches de matériaux fonctionnels (111A; 111B ; 111C ; 211) incluent une couche de résine de coulée durcissable présentant une image de sécurité optique imprimée en son sein.

2. Construction d'étiquette (101A) selon la revendication 1, dans laquelle la couche de film microporeux forme le premier côté du substrat, et dans laquelle les une ou plusieurs couches de matériaux fonctionnels (111A) sont disposées sur le premier côté du substrat et non sur le second côté du substrat.

3. Construction d'étiquette (101B) selon la revendication 1, dans laquelle la couche de film élastomère forme le second côté du substrat, et dans laquelle les une ou plusieurs couches de matériaux fonctionnels (111B) sont disposées sur le second côté du substrat et non sur le premier côté du substrat.

4. Construction d'étiquette (101C) selon la revendication 1, dans laquelle la couche de film microporeux forme le premier côté du substrat, dans laquelle la couche de film élastomère forme le second côté du substrat, et dans laquelle les une ou plusieurs couches de matériaux fonctionnels (111C) sont disposées à la fois sur les premier et second côtés du substrat.

5. Construction d'étiquette selon une quelconque revendication précédente, dans laquelle la couche de film microporeux est composée d'au moins certains parmi des films microporeux à base de polyoléfine, des films microporeux à base de polypropylène pour des applications de papier synthétique, ou des films microporeux multicouches.

6. Construction d'étiquette selon l'une quelconque des revendications 1 à 4, dans laquelle la couche de film microporeux est composée d'un film à base de polyoléfine présentant une épaisseur d'environ 80 µm.

7. Construction d'étiquette selon l'une quelconque des revendications précédentes, dans laquelle le film élastomère est composé d'au moins un parmi l'éthylène-acétate de vinyle, EVA, avec 9-28% en poids d'acétate de vinyle et de polyéthylène basse densité, LDPE.

8. Construction d'étiquette selon l'une quelconque des revendications 1 à 6, dans laquelle le film élastomère est composé d'un copolymère d'éthylène-acétate de vinyle présentant environ 18 % de revêtement d'extrusion d'acétate de vinyle en poids et une épaisseur d'environ 75 µm.

9. Construction d'étiquette (101A ; 101B) selon une quelconque revendication précédente, dans laquelle le substrat inclut en outre une couche d'adhésif (109) disposée entre les couches de film microporeux et de film élastomère.

10. Construction d'étiquette selon une quelconque revendication précédente, dans laquelle lesdites une ou plusieurs couches de matériaux fonctionnels incluent une couche supplémentaire sélectionnée parmi un ou plusieurs parmi une encre, des revêtements polymères, des revêtements pigmentaires, des matériaux réfléchissants et un matériau à cristaux liquides.

11. Construction d'étiquette selon la revendication 10, dans laquelle au moins l'une desdites couches de matériau fonctionnel forme des motifs, des images, des caractères ou des indices.

12. Construction d'étiquette selon la revendication 11, dans laquelle ledit substrat présente un ou plusieurs bords, et en outre dans laquelle lesdits motifs, images, caractères ou indices sont en alignement avec au moins un dit bord.

13. Procédé de fabrication d'une construction d'étiquette (101A ; 101B ; 101C ; 201), le procédé comprenant les étapes consistant à :
former un substrat (103A ; 103B ; 103C ; 203) en stratifiant une couche de film microporeux (105 ; 205) sur une couche de film élastomère (107 ; 207), ledit substrat présentant un premier et un second côté opposé ; et
disposer une ou plusieurs couches de matériaux fonctionnels (111A ; 111B ; 111C ; 211) sur au moins un des premier et second côtés du substrat ;
dans lequel l'étape de disposition d'une ou plusieurs couches de matériaux fonctionnels (111A; 111B ; 111C; 211) inclut un revêtement d'au moins un des premier et second côtés du substrat avec une couche de résine de coulée durcissable, une application d'une empreinte d'une image de sécurité optique à la résine liquide, et un durcissement de la résine pour former une couche solide.

14. Procédé selon la revendication 13, comprenant en outre l'étape consistant à :
former un ou plusieurs motifs, images, caractères ou indices sur ladite construction d'étiquette.
